# EUROPEAN PATENT APPLICATION

(11) **EP 3 965 245 A1**
(43) Date of publication of application: **09.03.2022**
(21) Application number: 20851730.0
(22) Date of filing: 07.07.2020
(51) Int. Cl.: H02J 1/14, H02J 1/10

(54) **MULTI-PORT ENERGY ROUTER, AND CONTROL SYSTEM AND CONTROL METHOD THEREOF**

(30) Priority: 14.08.2019 CN 201910748368
(71) Applicant: NR ELECTRIC CO., LTD., Jiangning Nanjing, Jiangsu 211102 (CN); NR Engineering Co., Ltd., Nanjing, Jiangsu 211102 (CN)
(72) Inventor: YANG, Chen, Nanjing, Jiangsu 211102 (CN); ZHANG, Zhongfeng, Nanjing, Jiangsu 211102 (CN); WANG, Yu, Nanjing, Jiangsu 211102 (CN); XIE, Yeyuan, Nanjing, Jiangsu 211102 (CN); TIAN, Jie, Nanjing, Jiangsu 211102 (CN); LI, Haiying, Nanjing, Jiangsu 211102 (CN); QI, Qi, Nanjing, Jiangsu 211102 (CN); GE, Jian, Nanjing, Jiangsu 211102 (CN); CAO, Dongming, Nanjing, Jiangsu 211102 (CN)
(74) Representative: Grünecker Patent- und Rechtsanwälte PartG mbB
(86) International application number: PCT/CN2020/100624
(87) International publication number: WO 2021/027441

(57) **Abstract**

Disclosed in the present invention is a multi-port energy router, comprising no less than 2 multi-port modules; each multi-port module comprises a first common port and a second common port and at least one remaining port. The first common port is a direct-current port and is connected to a direct-current bus or is suspended, the second common port is connected to an alternating-current bus or a direct-current bus, and all the remaining ports is able to be customized according to actual usage requirements. Such structure can provide a multi-port power supply solution having distributed characteristics, satisfying applications of various forms of electric energy of different voltage levels, and being able to well solve a voltage balance problem existing in the prior art. Also disclosed in the present invention are a control system and a control method for a multi-port energy router.

## Description

### TECHNICAL FIELD

The present invention belongs to the field of power electronics application, and relates to an alternating current/direct current (AC/DC) distribution network, a bidirectional converter, and an energy router, and in particular, to an energy router having a plurality of ports and a control system therefor and a control method therefor.

### BACKGROUND

As a device for implementing electric power exchange of a power system in an AC/DC distribution network in future, an energy router plays an important role and significance in implementing the optimized operation of a power distribution system of different electric energy forms. The core of the energy router is a power electronic transformer, which is an intelligent device designed based on the power electronic technology and capable of implementing functions such as power flow distribution, voltage improvement, power grid monitoring, fault isolation, and the like. According to the form of medium/high voltage electric energy, the power electronic transformer is further divided into an AC power electronic transformer and a DC power electronic transformer. The DC power electronic transformer is also referred to as a DC transformer for short.

In the power system, in order to implement the conversion from a medium/high voltage to a low voltage, affected by the stress and costs of switching tube devices, the power electronic transformer mostly adopts a structure having a plurality of modules with inputs in series and with outputs in parallel, that is, an ISOP structure. At this point, the power electronic transformer is only a two-port converter. A voltage on a low-voltage side constitutes only an electric energy interface of a voltage form. The electric energy interface is connected to a low-voltage DC bus.

In order to enable the energy router to output and obtain electrical energy of more voltage levels and forms, such as a commonly used three-phase 380 V AC, a 375 V DC, a 220 V DC secondary power supply, a 110 V DC secondary power supply, and the like, the energy router not only requires to be equipped with a power electronic transformer having the ISOP structure, and an additional DC/DC or DC/AC converter also requires to be disposed on the low-voltage DC bus. These additional DC/DC or DC/AC devices generally have their own starting circuits, an isolation breaker, a Hall detection device, and the like. In order to reduce the complexity and costs of the system, only a limited quantity of DC/DC and DC/AC devices can be disposed, causing the energy router to have only limited output ports, and resulting in a form of relatively concentrated power supply.

In addition, a DC or AC bus of a corresponding voltage level is constructed for an external DC/DC or DC/AC device again. When a photovoltaic device, a wind power device, an energy storage device, and some other low-voltage electrical devices based on switching power supplies are disposed in the system, these devices are generally further equipped with the corresponding DC/DC or DC/AC device to be connected to the system. This concept limits the significance of application of the existing distributed power system, and is not conducive to the connection of an energy storage and renewable energy device to the power distribution system.

On the other hand, the Chinese patent CN201710544441 has provided a chained multi-port grid-connected interface apparatus. The apparatus can convert a medium/high voltage bus into a plurality of ports of different voltage levels and forms of electric energy. However, this solution has an inherent defect. That is to say, the problem of power balance between different ports cannot be resolved. As a result, when the power supply of each port is uneven, the voltage of each module connected to the front end is unbalanced, even causing some modules to be powered down.

### SUMMARY

An objective of the present invention is to provide a multi-port energy router and a control system therefor and a control method therefor. On the one hand, in view of the traditional energy router having a power electronic transformer of an ISOP structure as the core and externally provided with partial DC/DC and DC/AC devices, a problem of relatively concentrated power supply ports set in the constructed energy router system is caused. The present invention can provide a solution of a multi-port power supply having distributed characteristics, to satisfy the application of various forms of electric energy of different voltage levels. On the other hand, in view of the voltage unbalance existing in the prior art of the patent, the problem can be effectively resolved, so that the implementation of the present invention is more useful.

To achieve the foregoing objective, the technical solutions of the present invention are as follows:

A multi-port energy router includes N multi-port modules, where N is an integer greater than or equal to 2.

Each multi-port module includes at least one first power module, one second power module, and one electrical isolation link, where the first power module includes at least two ports, and one of the two ports is an AC port; the second power module includes at least one DC port and one AC port, the DC port includes a DC anode and a DC cathode, and the DC port serves as a first port of the multi-port module; the electrical isolation link includes at least two ports, and all ports of the electrical isolation link have an electrical isolation function; the AC port of the first power module is connected to the first port of the electrical isolation link, and the other port of the first power module serves as a second port of the multi-port module; the AC port of the second power module is connected to the second port of the electrical isolation link; the remaining ports of the first power module and the second power module respectively serve as a third port, a fourth port, and so on of the multi-port module;
anodes of the first ports of all of the N multi-port modules are connected to one node, cathodes of the first ports are connected to another node, and the two nodes constitute a first common port of the multi-port energy router; the second ports of the N multi-port modules are connected in series sequentially or in parallel to constitute a second common port of the multi-port energy router; and the third ports, the fourth ports, and so on of the N multi-port modules jointly constitute the remaining ports of the multi-port energy router.

The electrical isolation link is connected between each second port and all of the remaining ports of the multi-port module where the second port is located.

The first common port of the multi-port energy router is suspended or connected to an external DC bus, and the second common port is connected to the external DC bus. the remaining ports of the multi-port energy router are respectively connected to devices of other types or suspended.

The second ports of the N multi-port modules are divided into two groups. The second ports in each group are connected in series sequentially or in parallel to form two chain links. The two chain links are in a true bipolar connection to constitute the second common port of the multi-port energy router. the first common port of the multi-port energy router is suspended or connected to an external DC bus, the second common port is connected to an external DC bus in a true bipolar form, and the remaining ports are respectively connected to devices of other types or suspended.

The second ports of the N multi-port modules are divided into three groups. The second ports in each group are connected in series sequentially or in parallel to form three chain links. The three chain links are in a star connection to constitute the star-connection-based second common port of the multi-port energy router. the first common port of the multi-port energy router is suspended or connected to an external DC bus, the second common port is connected to an external three-phase AC bus in a star connection, and the remaining ports are respectively connected to devices of other types or suspended.

The second ports of the N multi-port modules are divided into three groups. The second ports in each group are connected in series sequentially or in parallel to form three chain links. The three chain links are in a delta connection to constitute the delta-connection-based second common port of the multi-port energy router. the first common port of the multi-port energy router is suspended or connected to an external DC bus, the second common port is connected to an external three-phase AC bus in a delta connection, and the remaining ports are respectively connected to devices of other types or suspended.

The first power module is implemented by using a full-bridge circuit.

The first power module is implemented by a DC capacitor cascading of a half-bridge circuit and a full-bridge circuit.

The first power module is implemented by a DC capacitor cascading of two full-bridge circuits.

The second power module includes at least one full-bridge circuit and a DC/AC converter, and midpoints of two bridge arms of each full-bridge circuit are led out to constitute the AC port of the second power module. Two ends of the bridge arm of the full-bridge circuit constitute the DC port of the second power module, that is, the first port of the multi-port module. The DC port of the DC/AC converter is connected to the DC port of the full-bridge circuit, and the AC port constitutes the third port of the second power module, that is, the third port of the multi-port module.

The second power module includes at least one full-bridge circuit and a DC/DC converter, and midpoints of two bridge arms of each full-bridge circuit are led out to constitute the AC port of the second power module. Two ends of the bridge arm of the full-bridge circuit constitute the DC port of the second power module, that is, the first port of the multi-port module. One DC port of the DC/DC converter is connected to the DC port of the full-bridge circuit, and another DC port of the DC/DC converter constitutes the third port of the second power module, that is, the third port of the multi-port module.

The second power module includes only one full-bridge circuit, and midpoints of two bridge arms of the full-bridge circuit are led out to constitute the AC port of the second power module. Two ends of a DC capacitor constitute the DC port of the second power module, that is, the first port of the multi-port module. the midpoints of the two bridge arms are led out again and connected to smoothing reactors and then connected in parallel, and constitute another DC port of the DC/DC converter with either of the two ends of each bridge arm.

The electrical isolation link is an isolation transformer including at least two windings, which are defined as a first winding and a second winding. That is, a first port of the isolation transformer is the first winding, a second port is the second winding, and so on.

The multi-port module further includes a bypass switch. The bypass switch is connected in parallel with the second ports of all of the multi-port modules.

The multi-port module further includes a fuse, and the fuse is connected in series with the first ports of all of the multi-port modules.

A control system for the multi-port energy router includes a control apparatus, and at least one controller and at least one communication interface that correspond to each multi-port module. The control apparatus includes communication interfaces of a quantity not less than a total quantity of the communication interfaces of the multi-port module. The controller and the control apparatus of the multi-port module are configured to exchange data by using the communication interfaces on two sides. Each controller is configured to collect parameters of the multi-port module corresponding to the controller and transmit the parameters to the control apparatus, and the control apparatus is configured to generate a control instruction according to the parameters collected by the controller and deliver the control instruction to the each controller.

According to a control method for a control system for the multi-port energy router, the multi-port energy router is configured to control operations of the first common port and the second common port by using the following steps:
Step a1: detecting, by each controller, currents and voltages of the first common port and the second common port of the multi-port energy router in real time;
Step a2: transmitting, by the each controller, detection data to the control apparatus by using the communication interface;
Step a3: computing, by the control apparatus, the detection data, generating an adjustment control amount of each multi-port module, and delivering the adjustment control amount to the controllers of all of the multi-port modules by using the communication interface; and
step a4: controlling, by the each controller of the multi-port module, voltages and currents of the first port and the second port of the multi-port module corresponding to the controller according to the delivered adjustment control amount.

According to a control method for a control system for the multi-port energy router, a multi-port energy router is configured to control operations of the remaining ports by using the following steps:
Step b1: setting, by the control apparatus, fixed values of rated voltages and rated currents of all of the remaining ports of the multi-port energy router, and setting a power of each port not to exceed a rated power of the multi-port module where the each port is located;
Step b2: delivering, by the control apparatus, the set parameters to the controllers of all of the multi-port modules;
Step b3: detecting, by the each controller of the multi-port module, currents and voltages of the remaining ports of the corresponding multi-port module in real time;
Step b4: computing, by the controller of the multi-port module, data of detected currents and voltages, and generating a corresponding adjustment control amount according to the adjusted parameters delivered from the control apparatus;
Step b5: controlling, by the multi-port module, the voltages and the currents of the remaining ports according to the generated adjustment control amount; and
Step b6: uploading, by the multi-port module, data of the voltages and the currents of the remaining ports to the control apparatus by using the communication interface.

According to the solution, the multi-port energy router provided in the present invention is composed of two or more multi-port modules. The formed multi-port energy router includes two common ports. The two common ports are defined as a first common port and a second common port, as well as one or more remaining ports. In the multi-port energy router of the present invention, according to the configuration of the multi-port module, the first common port is a DC port connected to a DC bus, or may be suspended. The second common port is connected to an AC bus or the DC bus. All of the remaining ports can be customized according to actual use requirements, and output AC or DC voltages of various different voltage levels, so as to meet different actual use requirements. The present invention further relates to a set of control methods. According to the method, a necessary adjustment may be made to the power and voltage of the port according to the requirements for the voltage and current of the customized port.

Beneficial effects of the present invention are as follows:
(1) Compared with the existing traditional energy router having the power electronic transformer of the ISOP structure as the core and externally equipped with some DC/DC and DC/AC devices, the energy router of the present invention can provide power supply ports of more flexible and diverse power supply forms and voltage levels, so that the overall system of the energy router is more concentrated.
(2) Compared with the existing traditional energy router having the power electronic transformer of the ISOP structure as the core and externally equipped with some DC/DC and DC/AC devices, the energy router of the present invention can reduce a quantity of DC or AC bus stages established in the latter stages of the traditional solution, and reduce the energy conversion links of connected device, thereby improving the overall system operating efficiency.
(3) The energy router provided in the present invention can provide conversion ports with mutual independent control, and has the obvious characteristic of distributed power supply. That is to say, the energy router can provide separate control solutions for renewable energy devices such as a photovoltaic device, a wind power device, an energy storage device, and the like, and electric devices based on the switching power supply.
(4) Compared with the technical solutions of the existing patent, the present invention does not have the problem of voltage balance in the application of the chain structure, so that the energy router can be better directly connected to the existing medium and high voltage AC/DC buses, such as more than thousands of volts or more.

### BRIEF DESCRIPTION OF THE DRAWINGS

FIG. 1 is a schematic structural diagram of a multi-port energy router according to the present invention.
FIG. 2 is a schematic structural diagram of a multi-port energy router having second ports of a multi-port module connected in series.
FIG. 3 is a schematic structural diagram of a multi-port energy router connected to a true bipolar DC bus.
FIG. 4 is a schematic structural diagram of a multi-port energy router connected to a star-connection three-phase AC bus.
FIG. 5 is a schematic structural diagram of a multi-port energy router connected to a delta-connection three-phase AC bus.
FIG. 6 is a schematic structural diagram of a full-bridge circuit.
FIG. 7 is a schematic structural diagram of a half-bridge circuit cascading a full-bridge circuit.
FIG. 8 is a schematic structural diagram of two full-bridge circuits that are cascaded.
FIG. 9 is a schematic structural diagram of a second power module of a full-bridge circuit cascading an AC/DC circuit.
FIG. 11 is a schematic structural diagram of a second power module in which an I-type full-bridge circuit cascades a DC/DC circuit.
FIG. 12 is a schematic structural diagram of a second power module in which an II-type full-bridge circuit cascades a DC/DC circuit.

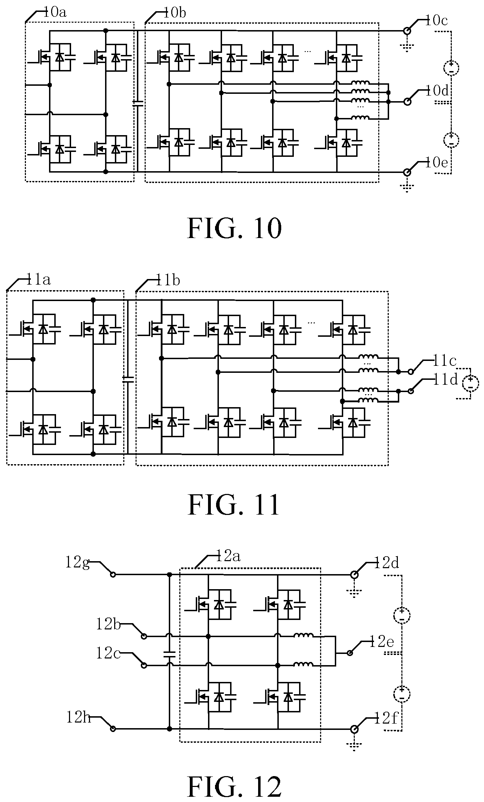

FIG. 10 is a schematic structural diagram of a second power module including only one full-bridge circuit.

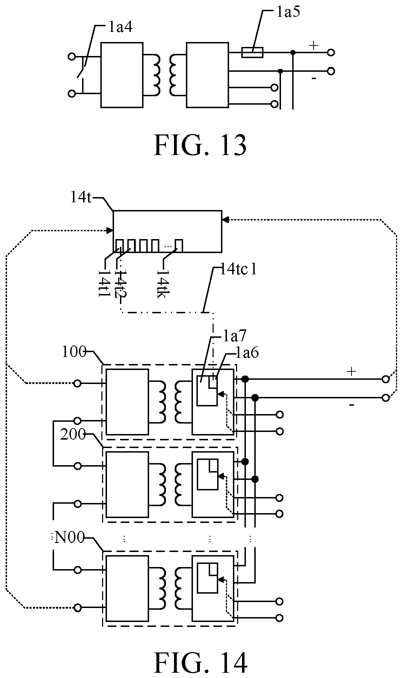

FIG. 13 is a schematic diagram of a multi-port module including a bypass switch and a fuse.
FIG. 14 is a schematic diagram of a control strategy of a multi-port energy router including a control apparatus.

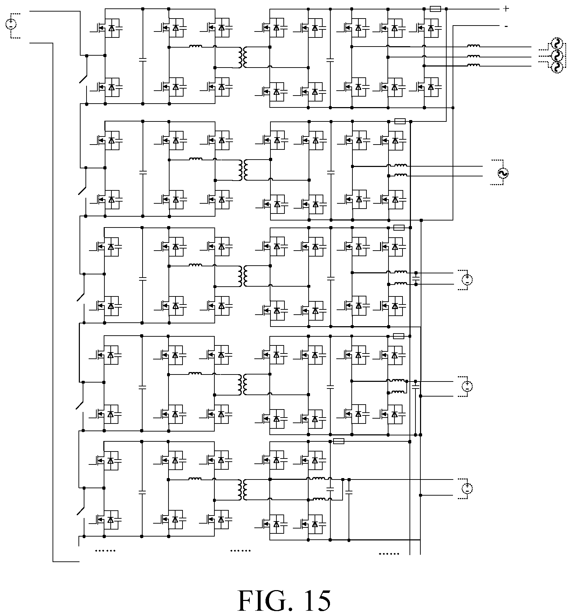

FIG. 15 is a diagram of an application example of a multi-port energy router for medium and high voltage DC systems.

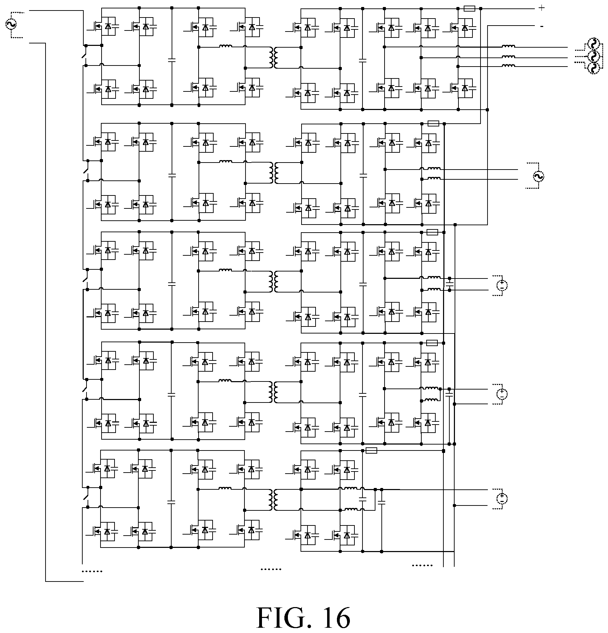

FIG. 16 is a diagram of an application example of a multi-port energy router for medium and high voltage AC systems.

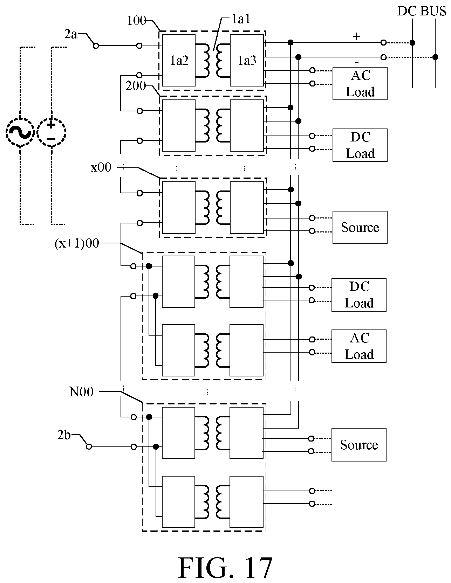

FIG. 17 is a diagram of an application example of a multi-port energy router including multi-port modules having different quantities of ports.

### DETAILED DESCRIPTION

The present invention provides a multi-port energy router and a control system therefor and a control method therefor. In order to make the objectives, technical solutions, and effects of the present invention clearer, the present invention is described in detail below with reference to the accompanying drawings.

It should be understood that the specific embodiments described herein are intended only to explain but not to limit the present invention.

The multi-port energy router is composed of N multi-port modules. N is an integer greater than or equal to 2. Each multi-port module includes at least three ports. At least one port is a DC port. That is, the port includes a DC anode and a DC cathode. The DC port is defined as a first port of the multi-port module. Each multi-port module further includes at least one port, and there is an electrical isolation link between the port and the first port. The port is defined as a second port. The remaining ports of each multi-port module are defined as a third port, a fourth port, ..., and an M^{th} port in sequence. Anodes of the first ports of all of the N multi-port modules are connected to one node, and cathodes of the first ports are connected to another node. The two nodes constitute a first common port of the multi-port energy router. The remaining ports of all of the multi-port modules jointly constitute the remaining ports of the multi-port energy router.

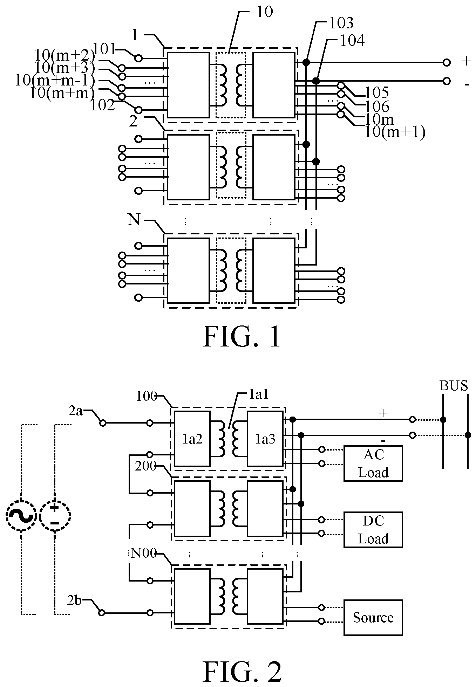

FIG. 1 is a schematic structural diagram of a multi-port energy router. Assemblies 100-N00 are N multi-port modules. An assembly 10 represents an electrical isolation link. Assemblies 103 and 104 are respectively an anode and a cathode of the DC port. That is to say, the assemblies 103 and 104 constitute a first port. The first ports of all of the multi-port modules are connected in parallel. That is to say, the assemblies 103 and 104 also constitute a first common port of the multi-port energy router. Assemblies 101 and 102 are ports, that is, the second ports. There are electrical isolation links between the ports and the DC port. Assemblies 105, 106, ..., 10 (m + m - 1), and 10 (m + m) are the remaining ports, which are defined as a third port, ..., and an M^{th} port according to the order.

In the multi-port module of the multi-port energy router, there is an electrical isolation link between a second port and all remaining ports of the multi-port module. As shown in FIG. 1, when an assembly 10 (m + 2) to an assembly 10 (m + m) do not exist, the assemblies 101 and 102 constitute a port. There is an electrical isolation link between the port and all of the remaining ports.

The second ports of the multi-port modules of the multi-port energy router are connected in series sequentially or in parallel to constitute a second common port of the multi-port energy router. The first common port of the multi-port energy router is suspended or connected to an external DC bus, and the second common port is connected to the external DC bus. The remaining ports are respectively connected to devices of other types such as a photovoltaic device, a wind power device, an energy storage device, a switching power supply, and the like, or are suspended.

As shown in FIG. 2, all multi-port modules have only three ports by way of example. The second port and all ports are electrically isolated from each other. The second ports of all of the multi-port modules are connected in series to form assemblies 2a and 2b, so as to constitute a second common port of the multi-port energy router. Similarly, the second ports of all of the multi-port modules are connected in parallel. In this way, the second common port of the multi-port energy router may also be formed. The second common port may be connected to an external single-phase AC bus or a DC bus in a pseudo bipolar form. The first common port may be connected to the external DC bus or suspended. The remaining ports are respectively connected to devices of other types such as a photovoltaic device, a wind power device, an energy storage device, a switching power supply, and the like depending on different application requirements.

The second ports of the multi-port module of the multi-port energy router are divided into two groups. The second ports in each group are connected in series sequentially or in parallel to form two chain links. The two chain links are in a true bipolar connection to constitute the second common port of the multi-port energy router. The first common port of the multi-port energy router is suspended or connected to the external DC bus, and the second common port is connected to the external DC bus in a true bipolar form. The remaining ports are respectively connected to devices of other types such as a photovoltaic device, a wind power device, an energy storage device, a switching power supply, and the like, or are suspended.

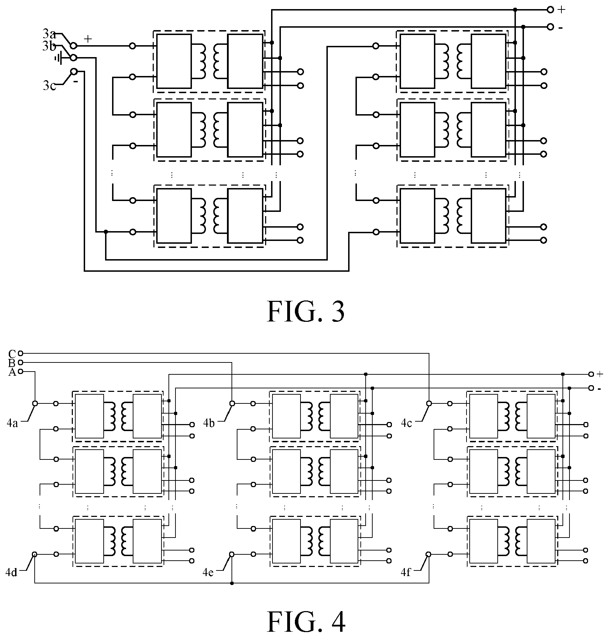

As shown in FIG. 3, all multi-port modules have only three ports by way of example. The second port and all ports are electrically isolated from each other. The second ports of all of the multi-port modules are divided into two groups. The second ports in each group are connected in series sequentially to form assemblies 3a, 3b, and 3c, so as to constitute the second common port of the multi-port energy router in the true bipolar connection mode. Similarly, the second ports of all of the multi-port modules are divided into two groups. The second ports in each group are connected in parallel to constitute the second common port of the multi-port energy router in the true bipolar connection mode. The second common port is connected to the external DC bus having the true bipolar connection mode. The first common port may be connected to the external DC bus or suspended. The remaining ports are respectively connected to devices of other types such as a photovoltaic device, a wind power device, an energy storage device, a switching power supply, and the like depending on different application requirements.

The second ports of the multi-port module of the multi-port energy router are divided into three groups. The second ports in each group are connected in series sequentially or in parallel to form three chain links. The three chain links are connected in a star connection to constitute the star-connection-based second common port of the multi-port energy router. The first common port of the multi-port energy router is suspended or connected to the external DC bus, and the second common port is connected to an external three-phase AC bus in a start connection. The remaining ports are respectively connected to devices of other types such as a photovoltaic device, a wind power device, an energy storage device, a switching power supply, and the like, or are suspended.

As shown in FIG. 4, all multi-port modules have only three ports by way of example. The second port and all ports are electrically isolated from each other. The second ports of all of the multi-port modules are divided into three groups. The second ports in each group are connected in series sequentially to form assemblies 4a, 4b, 4c, 4d, 4e, and 4f. The assemblies 4d, 4e, and 4f are connected to one node to constitute a second common port of the multi-port energy router in a star connection mode. Similarly, the second ports of all of the multi-port modules are divided into three groups. The second ports in each group are connected in parallel to constitute a second common port of the multi-port energy router in a star connection mode. The second common port is connected to an external three-phase AC bus in the star connection mode. The first common port may be connected to the external DC bus or suspended. The remaining ports are respectively connected to devices of other types such as a photovoltaic device, a wind power device, an energy storage device, a switching power supply, and the like depending on different application requirements.

The second ports of the multi-port module of the multi-port energy router are divided into three groups. The second ports in each group are connected in series sequentially or in parallel to form three chain links. The three chain links are connected in a delta connection, so as to constitute the delta-connection-based second common port of the multi-port energy router. The first common port of the multi-port energy router is suspended or connected to an external DC bus, and the second common port is connected to the external three-phase AC bus in the delta connection. The remaining ports are respectively connected to devices of other types such as a photovoltaic device, a wind power device, an energy storage device, a switching power supply, and the like, or are suspended.

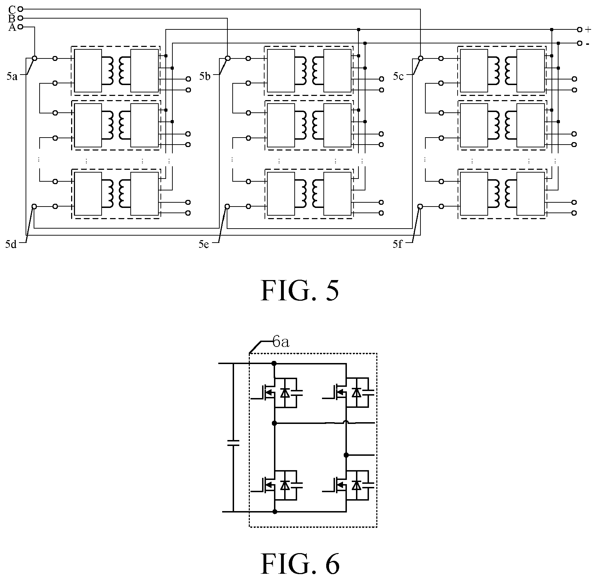

As shown in FIG. 5, all multi-port modules have only three ports by way of example. The second port and all ports are electrically isolated from each other. The second ports of all of the multi-port modules are divided into three groups. The second ports in each group are sequentially connected in series to form assemblies 5a, 5b, 5c, 5d, 5e, and 5f. The assemblies 5a to 5f are connected end to end in sequence to constitute a second common port of the multi-port energy router in the delta connection mode. Similarly, the second ports of all of the multi-port modules are divided into three groups. The second ports in each group are connected in parallel to constitute a second common port of the multi-port energy router in the delta connection mode. The second common port is connected to an external three-phase AC bus having the delta connection mode. The first common port may be connected to the external DC bus or suspended. The remaining ports are respectively connected to devices of other types such as a photovoltaic device, a wind power device, an energy storage device, a switching power supply, and the like depending on different application requirements.

Each multi-port module of the multi-port energy router includes at least one first power module, a second power module, and an isolation transformer. The first power module includes at least one AC port, and the second power module includes at least one DC port and one AC port. The DC port is a first port of the multi-port module, and the isolation transformer includes at least two windings. The AC port of the first power module is connected to one winding of the isolation transformer, and another port is a second port of the multi-port module. The AC port of the second power module is connected to a winding of the isolation transformer, which is not the same winding as the winding connected to the first power module.

As shown in FIG. 2, an assembly 1a1 is an isolation transformer, that is, an internal component part of the assembly 10 in FIG. 1. The assembly 1a2 is a first power module, and the assembly 1a3 is a second power module.

The first power module of the multi-port module is implemented by using a full-bridge circuit. FIG. 6 is a schematic diagram of a full-bridge circuit. An assembly 6a is a full-bridge circuit.

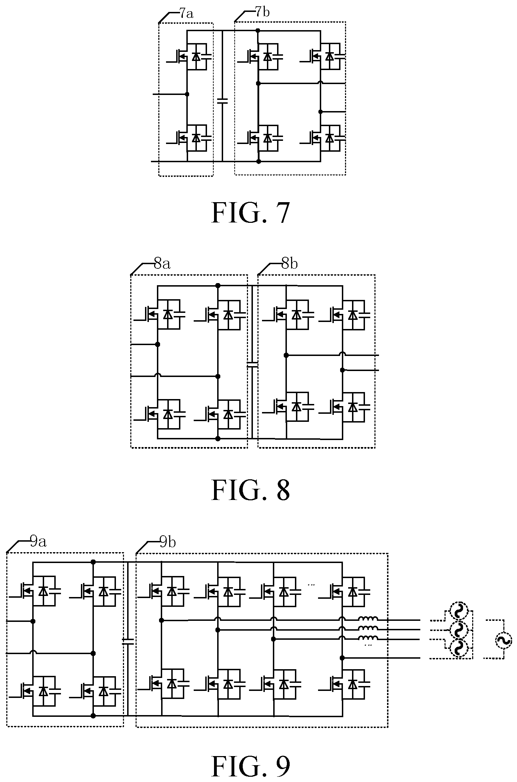

The first power module of the multi-port module is implemented by a DC capacitor cascading of a half-bridge circuit and a full-bridge circuit. FIG. 7 is a schematic diagram of a half-bridge circuit cascading a full-bridge circuit. An assembly 7a is a half-bridge circuit, and an assembly 7b is a full-bridge circuit.

The first power module of the multi-port module is implemented by a DC capacitor cascading of two full-bridge circuits. FIG. 8 is a schematic diagram of two full-bridge circuits that are cascaded. Assemblies 8a and 8b are both full-bridge circuits.

A second power module of the multi-port module includes at least one full-bridge circuit and one DC/AC converter. Midpoints of two bridge arms of the full-bridge circuit are led out to constitute an AC port of the second power module. Two ends of the bridge arm of the full-bridge circuit constitute a DC port of the second power module, that is, a first port of the multi-port module. A DC port of the DC/AC converter is connected to the DC port of the full-bridge circuit. The AC port forms a third port of the second power module, that is, a third port of the multi-port module.

FIG. 9 is a schematic structural diagram of a full-bridge circuit cascading a DC/AC circuit. An assembly 9a is a full-bridge circuit, and an assembly 9b is a DC/AC circuit constructed by a multi-arm bridge circuit. A single-phase, three-phase three-wire, or three-phase four-wire AC system may be connected depending on different quantities of connected bridge arms.

The second power module of the multi-port module includes at least one full-bridge circuit and one DC/AC converter. Midpoints of two bridge arms of the full-bridge circuit are led out to constitute an AC port of the second power module. Two ends of the bridge arm of the full-bridge circuit constitute a DC port of the second power module, that is, a first port of the multi-port module. One DC port of the DC/DC converter is connected to the DC port of the above full-bridge circuit, and another DC port forms a third port of the second power module, that is, a third port of the multi-port module.

FIG. 10 and FIG. 11 are schematic structural diagrams of two full-bridge circuits cascading a DC/DC circuit. The circuit shown in FIG. 10 is defined as a second power module in which an I-type full-bridge circuit cascades the DC/DC circuit, and the circuit shown in FIG. 11 is defined as a second power module in which an II-type full-bridge circuit cascades the DC/DC circuit.

In FIG. 10, an assembly 10a is a full-bridge circuit, and an assembly 10b is a DC/DC circuit constructed by a plurality of bridge-arm bridge circuits. An assembly 10c and an assembly 10d as well as an assembly 10e and an assembly 10d in the figure both can constitute a DC/DC port depending on different grounding nodes.

In FIG. 11, an assembly 11a is a full-bridge circuit, and an assembly 11b is a DC/DC circuit constructed by a plurality of bridge-arm bridge circuits. Assemblies 11c and 11d constitute a DC/DC port.

The second power module of the multi-port module includes only one full-bridge circuit. Midpoints of two bridge arms of the full-bridge circuit are led out to constitute an AC port of the second power module. Two ends of a DC capacitor constitute a DC port of the second power module, that is, the first port of the multi-port module. The midpoints of the two bridge arms are led out again to be respectively connected to smoothing reactors and then connected in parallel, and constitute another DC port of a DC/DC converter with either of the two ends of each bridge arm. FIG. 12 shows a second power module constructed by a full-bridge circuit. An assembly 12a is a full-bridge circuit, and assemblies 12b and 12c constitute an AC port. Depending on different grounding nodes, one of assemblies 12d and 12e or assemblies 12f and 12e may be selected to constitute a DC/DC port. Assemblies 12g and 12h constitute a DC port, that is, a first port of the multi-port module where the assemblies are located.

The multi-port module of the multi-port energy router further includes a bypass switch. The bypass switch is connected in parallel with second ports of all multi-port modules.

The multi-port module of the multi-port energy router further includes one fuse. The fuse is connected in series with first ports of all multi-port modules.

FIG. 13 is a schematic structural diagram of one multi-port module. An assembly 1a6 is a bypass switch, and an assembly 1a7 is a fuse.

The multi-port energy router further includes a set of control apparatuses, and each multi-port module includes at least one controller and at least one communication interface. The control apparatus includes communication interfaces of a quantity not less than a total quantity of the communication interfaces of the multi-port module. The controller and the control apparatus of the multi-port module are configured to exchange data by using the communication interfaces on two sides.

According to a method for controlling a multi-port energy router provided in the present invention, the multi-port energy router controls operations of the first common port and the second common port by using the following steps.
Step 1: A controller of a multi-port module detects a current and a voltage of the second common port of the multi-port energy router in real time.
Step 2: The controller of the multi-port module detects a current and a voltage of the first common port of the multi-port energy router in real time.
Step 3: The controller of the multi-port module transmits detection data to a control apparatus by using a communication interface.
Step 4: The control apparatus computes the data to generate an adjustment control amount of each multi-port module, and delivers the adjustment control amount to all controllers of all multi-port modules by using a communication interface.
Step 5: The controller of the multi-port module controls voltages and currents of a first port and a second port of the module according to the delivered adjustment control amount, that is, controls operation of the first common port and the second common port of the multi-port energy router.

The multi-port energy router is configured to control operations of the remaining ports by using the following steps.
Step 1: A control apparatus adjusts fixed values of rated voltages and rated currents of all remaining ports of the multi-port energy router, so that a power of each port does not exceed a rated power of a multi-port module where the each port is located.
Step 2: The control apparatus delivers the adjusted parameters to controllers of all of the multi-port modules.
Step 3: The controller of each multi-port module detects currents and voltages of the remaining ports of the corresponding multi-port module in real time.
Step 4: The controller of the multi-port module computes data of detected currents and voltages, and generates a corresponding adjustment control amount according to the adjusted parameters delivered from the control apparatus.
Step 5: The multi-port module controls the voltages and the currents of the remaining ports according to the generated adjustment control amount.
Step 6: The multi-port module uploads data of the voltages and the currents of the remaining ports to the control apparatus by using a communication interface.

As shown in FIG. 14, an assembly 14t represents the control apparatus, assemblies 14t1-14tk represent communication interfaces of the control apparatus, the assembly 1a6 represents the communication interface of the multi-port module 100, the assembly 1a7 represents the controller of the multi-port module 100, and an assembly 14tc1 represents a communication path between the control apparatus and the multi-port module 100. Similarly, communication paths are provided between assemblies 14t2-14tk and all of the multi-port modules. The assembly 1a7 controller obtains information about the voltages and currents of the remaining ports, and uploads the information to the control apparatus by using a communication port. The control apparatus detects information about voltages and currents of the first common port and the second common port of the multi-port energy router in real time, so as to control and adjust the entirety of the multi-port energy router.

In order to describe the application of the present invention in detail, according to the above description, FIG. 15 to FIG. 17 are schematic structural diagrams of a hybrid multi-port energy router constructed according to the present invention. FIG. 15 shows that a second common port of the multi-port energy router is a medium and high voltage DC bus. FIG. 16 shows that a second common port of the multi-port energy router is a medium and high voltage AC bus. By means of different configurations, each multi-port module can output a DC, a single-phase AC, and a three-phase AC at different common ground nodes. The multi-port energy router shown in FIG. 17 adopts multi-port modules having different quantities of ports. In the figure, assemblies 100-x00 are three-port modules, and an assembly (x+1)00 to an assembly N00 are multi-port modules.

Taking the circuit shown in FIG. 2 as an example, the composition principle of the circuit is described by using a fixed quantity.

As shown in FIG. 2, one multi-port energy router includes N multi-port modules. It is assumed that a rated power of the multi-port energy router is P, a voltage of a second common port is *U*₂, and a voltage of a first common port is *U*₁. It is easily obtained that the rated power of each multi-port module is P/N, a voltage of a first port is *U*₁, and a voltage of a second port is *U*₂/N. Assuming that a voltage of a third port of each multi-port module is *U*₃, the *U*₃ can be adjusted by adjusting a duty cycle of a full-controlled device of a half-bridge circuit or a full-bridge circuit where the third port is located.

Third ports of other types can be designed in a similar way.

It may be understood that, for a person of ordinary skill in the art, equivalent replacements or changes may be made according to the technical solutions of the present invention and the inventive concept thereof, and such changes or equivalent replacements shall fall within the protection scope of the appended claims of the present invention.

## Claims

1. A multi-port energy router, **characterized by** comprising: N multi-port modules, where N is an integer greater than or equal to 2;
each multi-port module at least includes a first power module, a second power module, and an electrical isolation link, wherein the first power module at least includes two ports, and one of the two ports is an AC port; the second power module at least includes a DC port and an AC port, the DC port includes a DC anode and a DC cathode, and the DC port serves as a first port of the multi-port module; the electrical isolation link at least includes two ports, and all ports of the electrical isolation link have an electrical isolation function to each other; the AC port of the first power module is connected to a first port of the electrical isolation link, and another port of the first power module serves as a second port of the multi-port module; the AC port of the second power module is connected to a second port of the electrical isolation link; remaining ports of the first power module and the second power module respectively serve as a third port, a fourth port, and so on of the multi-port module;
anodes of first ports of all of the N multi-port modules are connected to one node, cathodes of the first ports of all of the N multi-port modules are connected to another node, and the two nodes constitute a first common port of the multi-port energy router; second ports of the N multi-port modules are connected in series sequentially or in parallel to constitute a second common port of the multi-port energy router; and third ports, fourth ports, and so on of the N multi-port modules jointly constitute remaining ports of the multi-port energy router.

2. The multi-port energy router according to claim 1, **characterized in that**, the electrical isolation link is connected between the second port and all of the remaining ports of the multi-port module where the second port is located.

3. The multi-port energy router according to claim 1, **characterized in that**, the first common port of the multi-port energy router is suspended or connected to an external DC bus, the second common port is connected to an external DC bus, and the remaining ports of the multi-port energy router are respectively connected to devices in other types or suspended.

4. The multi-port energy router according to claim 1, **characterized in that**, the second ports of the N multi-port modules are divided into two groups, the second ports in each group are connected in series sequentially or in parallel to form two chain links, the two chain links are in a true bipolar connection to constitute the second common port of the multi-port energy router, the first common port of the multi-port energy router is suspended or connected to an external DC bus, the second common port is connected to an external DC bus in a true bipolar form, and the remaining ports are respectively connected to devices in other types or suspended.

5. The multi-port energy router according to claim 1, **characterized in that**, the second ports of the N multi-port modules are divided into three groups, the second ports in each group are connected in series sequentially or in parallel to form three chain links, the three chain links are in a star connection to constitute the star-connection-based second common port of the multi-port energy router, the first common port of the multi-port energy router is suspended or connected to an external DC bus, the second common port is connected to an external three-phase AC bus in a star connection, and the remaining ports are respectively connected to devices in other types or suspended.

6. The multi-port energy router according to claim 1, **characterized in that**, the second ports of the N multi-port modules are divided into three groups, the second ports in each group are connected in series sequentially or in parallel to form three chain links, the three chain links are in a delta connection to constitute the delta-connection-based second common port of the multi-port energy router, the first common port of the multi-port energy router is suspended or connected to an external DC bus, the second common port is connected to an external three-phase AC bus in a delta connection, and the remaining ports are respectively connected to devices of other types or suspended.

7. The multi-port energy router according to claim 1, **characterized in that**, the first power module is implemented by using one full-bridge circuit.

8. The multi-port energy router according to claim 1, **characterized in that**, the first power module is implemented by a DC capacitor cascading of a half-bridge circuit and a full-bridge circuit.

9. The multi-port energy router according to claim 1, **characterized in that**, the first power module is implemented by a DC capacitor cascading of two full-bridge circuits.

10. The multi-port energy router according to claim 1, **characterized in that**, the second power module at least comprises a full-bridge circuit and a DC/AC converter, wherein midpoints of two bridge arms of the full-bridge circuit are led out to constitute the AC port of the second power module, two ends of the bridge arms of the full-bridge circuit constitute the DC port of the second power module, that is, the first port of the multi-port module, and a DC port of the DC/AC converter is connected to the DC port of the full-bridge circuit, and an AC port constitutes a third port of the second power module, that is, the third port of the multi-port module.

11. The multi-port energy router according to claim 1, **characterized in that**, the second power module at least comprises a full-bridge circuit and a DC/DC converter, wherein midpoints of two bridge arms of the full-bridge circuit are led out to constitute the AC port of the second power module, two ends of the bridge arms of the full-bridge circuit constitute the DC port of the second power module, that is, the first port of the multi-port module, and one DC port of the DC/DC converter is connected to the DC port of the full-bridge circuit, and another DC port of the DC/DC converter constitutes a third port of the second power module, that is, the third port of the multi-port module.

12. The multi-port energy router according to claim 1, **characterized in that**, the second power module comprises only one full-bridge circuit, wherein midpoints of two bridge arms of the full-bridge circuit are led out to constitute the AC port of the second power module, two ends of a DC capacitor constitute the DC port of the second power module, that is, the first port of the multi-port module, and the midpoints of the two bridge arms are led out again and respectively connected to smoothing reactors, and then connected in parallel, and constitute another DC port of the DC/DC converter with either of the two ends of the bridge arms.

13. The multi-port energy router according to claim 1, **characterized in that**, the electrical isolation link is an isolation transformer comprising at least two windings, a q^{th} winding is a q^{th} port of the isolation transformer, q = 1, 2, ..., Q, and Q is a quantity of the windings.

14. The multi-port energy router according to claim 1, **characterized in that**, the multi-port module further comprises a bypass switch, and the bypass switch is connected in parallel with the second ports of all of the multi-port modules.

15. The multi-port energy router according to claim 1, **characterized in that**, the multi-port module further comprises a fuse, and the fuse is connected in series with the first ports of all of the multi-port modules.

16. A control system for the multi-port energy router according to claim 1, **characterized in that**, the control system comprises a control apparatus, and at least one controller and at least one communication interface that correspond to each multi-port module, wherein the control apparatus includes communication interfaces of a quantity not less than a total quantity of communication interfaces of the multi-port module, the controller and the control apparatus of the multi-port module exchange data to each other by using the communication interfaces on two sides, each controller is configured to collect parameters corresponding to the multi-port module and transmit the parameters to the control apparatus, and the control apparatus generates a control instruction according to the parameters collected by the controller and delivers the control instruction to each controller.

17. A control method for the control system for the multi-port energy router according to claim 16, **characterized in that**, the multi-port energy router controls operations of the first common port and the second common port by using following steps:
Step a1: detecting, by the controller, currents and voltages of the first common port and the second common port of the multi-port energy router in real time;
Step a2: transmitting, by the controller, detection data to the control apparatus by using the communication interface;
Step a3: computing, by the control apparatus, the detection data, and generating, by the control apparatus, an adjustment control amount of each multi-port module, and delivering an adjustment control amount to the controllers of all of the multi-port modules by using the communication interfaces; and
Step a4: controlling, by the controller of the multi-port module, the voltages and currents of the first port and the second port of the corresponding multi-port module according to the delivered adjustment control amount.

18. A control method for the control system for the multi-port energy router according to claim 16, **characterized in that**, the multi-port energy router controls operations of the remaining ports by using following steps:
Step b1: setting, by the control apparatus, fixed values of rated voltages and rated currents of all of the remaining ports of the multi-port energy router, and controlling, by the control apparatus, a power of each port not to exceed a rated power of the multi-port module where the port is located;
Step b2: delivering, by the control apparatus, the set parameters to the controllers of all of the multi-port modules;
Step b3: detecting, by the controllers of each multi-port module, currents and voltages of the remaining ports of the corresponding multi-port module in real time;
Step b4: computing, by the controllers of each multi-port module, data of detected currents and voltages, and generating a corresponding adjustment control amount according to the set parameters delivered from the control apparatus;
Step b5: controlling, by the multi-port module, the voltages and the currents of the remaining ports according to the generated adjustment control amount; and
Step b6: uploading, by the multi-port module, the data of the voltages and the currents of the remaining ports to the control apparatus by using the communication interface.
